# EUROPEAN PATENT SPECIFICATION

(11) **EP 3 194 683 B1**
(45) Date of publication and mention of the grant of the patent: **19.06.2019**
(21) Application number: 15766150.5
(22) Date of filing: 17.09.2015
(51) Int. Cl.: E04D 13/04

(54) **SURFACE COVERING SYSTEM AND METHODS FOR PREPARING SUCH A SYSTEM**
OBERFLÄCHENABDECKUNGSSYSTEM UND METHODEN EIN SOLCHES SYSTEM VORZUBEREITEN
SYSTEME DE REVETEMENT DE SURFACES ET DES METHODES POUR PREPARER UN TEL SYSTEME

(30) Priority: 17.09.2014 SE 1451086
(43) Date of publication of application: 26.07.2017
(73) Proprietor: Grade Group AS, 1400 Ski (NO)
(72) Inventor: SJÖDÉN, Tord, S-175 67 Järfälla (SE)
(74) Representative: Bergenstråhle Group AB
(86) International application number: PCT/EP2015/071386
(87) International publication number: WO 2016/042111

(56) References cited:
- WO-A1-2013/172775
- FR-A- 1 601 114
- GB-A- 1 582 850

## Description

### Technical field

The present invention relates to a surface covering system intended to cover a roof, a floor or another substantially flat limited surface which may be subjected to a falling fluid and which thus requires drainage. The system comprises rectangular plates with a prefabricated slope, for example towards a draining sewer, draining point or a gutter. The invention also relates to methods for preparing such a system.

### Background

In order to not create accumulations of water or other fluids, such as oil or similar, on a surface, a decline or slope is needed towards a draining sewer or a gutter. The surface may for example be underlying material in the form of a flat roof, the ground surface of a patio, the floor of a garage, kitchen or wet room, such as for example a bathroom, shower room or laundry room or another substantially flat limited surface that may be exposed to water in the form of rain or water dripping and which therefore is in the need of draining.

The prior art document FR1601114A describes a surface covering system according to the preamble of claim 1.

### Summary

One object of the present invention is to provide a surface covering system comprising prefabricated construction elements, with which system it is possible to easily and quickly construct a surface that has sufficient drainage of water and an even slope towards a draining sewer or gutter.

This object is achieved through a surface covering system intended to cover a roof, a floor or other substantially flat limited surface according to claim 1, which comprises at least one substantially rectangular, triangular, quadrangular or otherwise polygonal plate with a first mark that marks a highest point, i.e. an apex, and a substantially flat lower surface and an upper surface with a first slope facing from the first mark towards at least one second mark, provided in connection to the plate's outer edge. According to an aspect of the invention, the first slope is circular and has a radial linear inclination facing from the first mark from essentially all points on the at least one plate so that the slope forms an elevation in the plate with the shape of at least a part of a cone or blunt cone, with the apex of the cone defined by the first mark and with the lowest point or lowest points of the upper surface of the plate defined by the at least one second mark.

The term radial linear inclination is intended to mean a surface defined by an angle between the inclined surface and the flat bottom surface which is constant from essentially all points on the plate, except for the surface in close connection with the first mark. The inclination thus forms an elevation in the plate which has the shape of at least a part of a cone or a blunt cone, with the tip or apex of the cone defined by the first mark. The cone is preferably defined as a straight, circular cone.

With this solution there is provided a surface covering system comprising at least one prefabricated plate which has an even circular inclination which originates from the placement of the apex or apexes on a specific roof or in a specific room or another specific surface. The advantages with an even circular inclination is partly that exactly the same amount falls towards the draining point/draining points or gutter from all the points in the entire surface, partly that it is possible to cover the surface with e.g. stone- or ceramic plates and achieve even joints or an even abutting against the underlying material without having to cut the plates, which entails a substantial time saving. An even slope also facilitates when the surface is covered with asphalt, roof plate, cardboard or cloth with felt, which is the case if the surface covering system is a roof or a patio. The placement of the apex thus determines the appearance of each plate segment and each plate segment is unique and intended for a specific limited surface. At the lowest point or points of the system, typically at points of which system which are at a maximal radial distance from the apex, are preferably draining points at which preferably apertures are provided, which function as draining sewers optionally connected to waste pipes/gutters. These points are marked with the second mark. According to one aspect, only one aperture is provided e.g. because there is only one lowest point.

In a first embodiment, the surface covering system comprises at least two separate substantially rectangular, triangular, quadrangular or in other ways polygonal plates with a substantially flat lower surface and an upper surface, wherein the at least two plates are intended to be arranged side by side. One of the at least two plates has a first mark which marks an apex and wherein both at least two separate plates have an upper surface with a first common circular slope with a radial inclination facing from the first mark towards at least one second mark, arranged in connection to the outer edge of the plate, which marks a lowest point when the plates are arranged side by side.

By using at least two plates, a larger modular surface covering system with a common slope towards a floor drain or gutter may be manufactured without the system being difficult to transport or distribute.

In one embodiment, the upper surface of each respective at least one lateral edge is beveled so that a beveled groove is formed in the junction that arises between the plates when the plates are arranged side by side.

The beveled groove may be filled with e.g. liquid filler. If the liquid filler is arranged both in the junctions between the plates and on the upper surfaces of the plates, the separate plates become cast together to one unit.

In another embodiment, there is locally, closest to the first mark, a second circular slope having a second inclination which is steeper than the first inclination of the first circular slope. The second slope with the second inclination preferably extends from the first mark to a virtual circular line arranged on a distance from the mark corresponding to a radius up top 500 mm.

By having a steeper slope closest to the apex, a better drainage is created locally around the apex. The quick, local draining prevents an accumulation of water close to the apex.

In one embodiment, grooves are arranged in the upper surface and/or the lower surface of the at least one plate. At least two grooves may be arranged crossing each other, creating a chequered pattern. A device for heating, e.g. floor heating, roof heating, and/or for reinforcement, e.g. a reinforcing bar, may be placed in at least one of the grooves. It is also possible to fill up the grooves with liquid filler.

Grooves arranged in the upper surface may be used for roof heating, floor heating, and grooves arranged in the lower surface may be used for ventilating any moisture that may arise between bottom floor/bottom roof and surface- or roof covering system. The grooves for floor heating/roof heating are preferably arranged in a chequered pattern that completely follows the inclination of the floor or roof. It is also possible for the grooves to be arranged in the upper surface before the decline is created. In this embodiment, the chequered pattern does not follow the inclination of the floor, but it is instead flat. If the grooves are filled up with liquid filler, the heat from the floor heating coils/roof heating coils is evenly spread out across the floor/roof due to liquid filler conducting heat much better than the plate material.

The invention also relates to a method for preparing a surface covering system according to any of the above mentioned embodiments. The method is characterized in that it comprises the following steps:
placing at least one rectangular plate on a work table,
marking, with a first mark, at least one apex on the at least one plate,
determining a desired inclination on an upper surface of the at least one plate in a direction from the first mark, based on the information about desired size of the surface the system is to be adapted to, the thickness of the plates and the position of the apex, and
machining a desired inclination of the upper surface of the at least one plate.

One advantage of the above method for manufacturing a surface covering system is that a circular slope with an even inclination may be prepared without a complicated manufacturing process for the one or more prefabricated plates which the system comprises.

In one embodiment, the slope or inclination is machined with circular or linear movements originating from the first mark. If the slope is machined with circular or linear movements originating from the mark, for example with a miller, each floor may be specially manufactured according to the wishes of a customer.

The mill may preferably be a programmable 5-axes mill. The mill may preferably be programmed with information regarding desired size of the surface which the system is to be adapted to, the thickness of the plates as sewer as the position of the apex.

By e.g. using a miller comprising a milling spindle which is tilted to a desired inclination, the manufacturing process may be further facilitated. If a programmable 5-axes mill is used, the manufacturing process is faster and the lead times are decreased. Preferably, the mill is provided with information from a platform programmed with information regarding desired roof size, thickness of the plates as sewer as the placement of the apex. The platform is chosen dependent on how many apexes the surface covering system is to have.

The invention further relates to an additional method for manufacturing a surface covering system comprising at least one plate with a first mark which marks an apex according to any of the above disclosed embodiments. This method is characterized by that it comprises the following steps:
choosing a first mould comprising an inner volume which at least partly corresponds to the volume of the at least one plate, wherein the mould is defined by a surface having at least one determined desired radial positive inclination (α, β) in a direction from the first mark which marks apex towards the outer edges of the mould, and
supplying material in an amount related to the at least one plate in the mould.

In one embodiment, the preparing of the at least one plate is made by use of any of the following manufacturing methods hot pressing, compression moulding or casting of the at least one plate.

In one embodiment the selected mould is one-part or two-part and comprises at least a first mould part comprising the hollowed out portion with a positive inclination from the first mark (hollowed out cone mould) intended to create the circular slope. A one-part form is preferably used in casting where the first mould part is used as a lower part and a two-part form is preferably used in hot pressing or compression moulding.

In a second embodiment, at least one second mould is also chosen, with an inner volume corresponding to the volume of a second separate plate having a slope which is common with the second plate and wherein material is supplied to the second form in an amount relating to the second plate.

If hot pressing or compression moulding is used as manufacturing method, at least one of the mould parts may be used in prefabricating/manufacturing multiple ones of the plates which together form the surface covering system. For larger systems, for example comprising square shaped plates with a plate having a centrally disposed apex, the whole mould, i.e. both the first and second mould parts, may be used for manufacturing more plates since multiple plates then have the same slope. Preferably at least four plates have the same slope.

In an additional embodiment, the outer dimensions of the at least one mould are the same as the outer dimensions of the at least second mould.

In an additional embodiment, any of the above methods also comprises steps for creating a hole for a draining sewer or draining point, at at least a second mark which marks a lowest point of an upper surface of the surface covering system, and/or machining grooves in the upper surface and/or lower surface of the at least one plate, which surfaces extend across the whole respective surface.

Through creating holes for a draining sewer or point, and possibly also for waste pipes and similarly, and also milling grooves that may be used for e.g. floor heating/roof heating and adapting the outer dimensions of the plate, already during the manufacturing of the surface covering system, as little as possible is needed to be done at site when the system is installed. This reduces the amount of waste that otherwise arises when cutting and creating holes. The waste which arises in the factory during manufacturing of the system may be taken advantage of immediately, and recycled or reused for new plates.

All the above embodiments or parts of an embodiment may be freely combined as long as they fall under the scope of the appended claims.

### Short description of the drawings

The invention will now be described, by way of example, with reference to the accompanying drawings, in which:

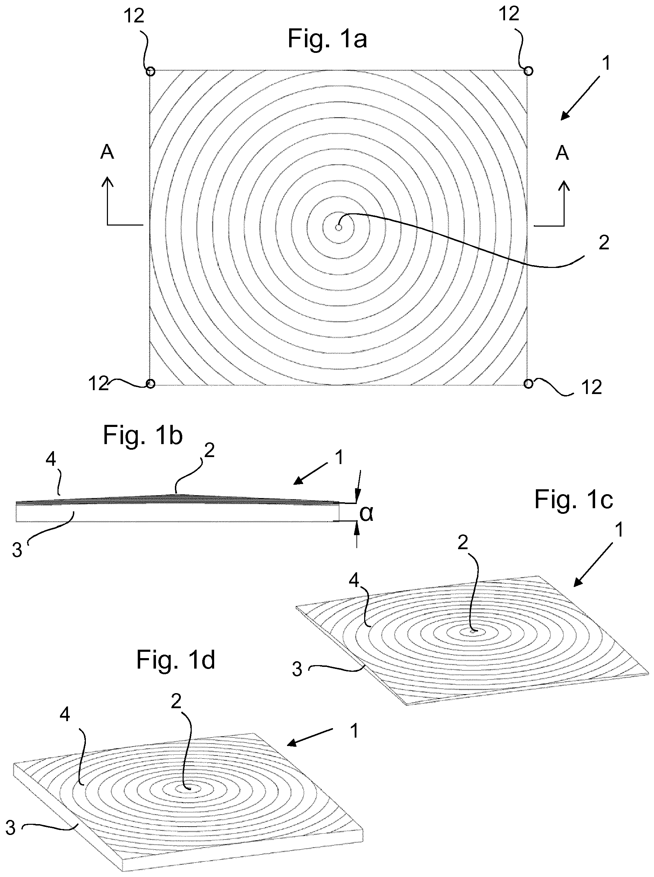

Fig. 1a shows a first embodiment of the invention in plan view,
Fig. 1b shows a cross section of the invention according to the first embodiment,
Fig. 1c shows a perspective view of the invention according to the first embodiment,
Fig. 1c shows a perspective view of the invention with exaggerated dimensions,
Fig. 2a shows a second embodiment of the invention in a plan view,
Fig. 2b shows a cross section A-A of figure 2a,
Figs. 3a-3c shows some possible forms of the surface covering system adapted for different dimensions of the surface to which the system is to be adapted,
Figs. 4a and 4b show a third embodiment with cutouts for floor heating and/or ventilation,
Figs. 5a, 5b and 5c show moulds of two different manufacturing methods,
Figs. 6a-6c show an alternative embodiment of the surface covering system comprising square plates, and
Fig. 7 shows an alternative embodiment of the surface covering system comprising square plates.

### Detailed description

In the following is a detailed description of embodiments of the invention. All examples should be seen as parts of the general description and are therefore generally possible to combine.

Below the surface covering system will be described as a roof system for a flat or essentially flat roof, but of course the system is possible to use for creating drainage on other essentially planar limited surfaces, for example on floors or on patios.

Figures 1a-1c show a first embodiment of the roof system comprising a plate 1 with a first mark 2 for a highest point, i.e. an apex which also may be called vertex. The first mark 2 may also be the apex itself. The first mark 2 is in this embodiment centered on the plate 1, but it may also be placed on another suitable place from the edge of the plate, e.g. 450mm - 600mm from the edge of the plate. The plate is in this embodiment rectangular but may also be substantially rectangular (e.g. square), triangular, quadrangular or have another polygonal shape. The term substantially rectangular, triangular, quadrangular or otherwise polygonal also comprises plates comprising various form fit or connection details disposed at the edges of the plate in order to join or connect multiple plates with each other.

In connection to the outer edges of the plate, the lowest point or points of the system are defined by at least one second mark 12. At at least some of the marks 12, preferably the lowest mark 12, there may be disposed a device for draining, e.g. a hole connecting to a floor drain, gutter or drain pipe. In one embodiment, drain pipes are disposed along the entire outer edges of the plate in order to accumulate water along the edges of the entire plate and direct this towards at least the lowest of the marks 12. The plate 1 has a substantially flat lower surface 3 and an upper surface 4 with a slope facing from the mark 2. The slope is circular and has a radial inclination α from the mark from essentially all points on the at least one plate so that the decline forms an elevation in the plate with the shape of at least a part of a cone or a blunt cone with the tip of the cone corresponding to or defined by the mark 2. Since the plate has a polygonal shape, the elevation in the form of a blunt cone is cut down in its periphery, i.e. the straight edges of the plate end the circular slope, see Fig. 1c. Through this configuration the lowest point of the system, defined by the at least one second mark 12, will be disposed in connection to the outer edges of the plate. This lowest point will land in the corner or corners which are peripherally furthest away from the first mark 2 defining the apex of the plate. In figure 1d, the thickness of the plate is exaggerated in order to illustrate the cone shape of the elevation.

The plates may be made of e.g. polystyrene cellular plastic of the type EPS or XPS or polyamide plastic (PA), polypropylene (PP) or polyurethane (PUR). However, the plate material may also be glass foam or any other plate material suitable for the purpose. According to one embodiment, the plate material is Rockwool® material, such as e.g. stone wool or roof plate. In additional embodiments, plates are cast with a circular slope of concrete or other material suitable for casting. It is also possible to compression mould or hot press the plates from other materials suitable for these manufacturing processes.

The plates used as separate parts in the surface covering system are substantially flat on the bottom part and are thus intended to lie on a flat underlying material. EPS plates with dimensions up to 600 mm x 3300 mm may preferably be used, but plates with any other dimensions may of course also be used. Square plates may for example be suitable from an assembling perspective.

Plates made from a water impermeable material, such as e.g. polyamide plastic (PA) or polypropylene (PP) may be an advantage when they are to be placed e.g. in a wet room. The plates may then act as a moisture barrier against the underlying floor structure and sealing is needed only along the walls and along any junctions between the plates.

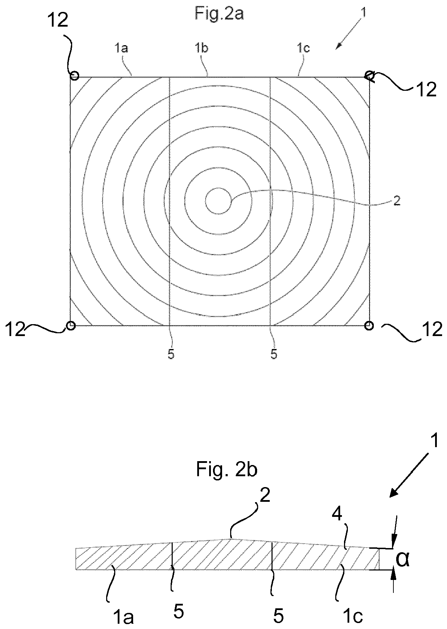

Figures 2a and 2b show a second embodiment of the invention wherein the roof system comprises three separate rectangular plates 1a, 1b, 1c which are placed side by side in order to together form the upper surface 4 of the roof. Of course, more than three plates may also be used. The plates may be attached to each other by use of glue or other attachment devices, or they may be attached to the floor side by side. The junctions 5 between the plates may be sealed with a form of sealing tape. It is also possible to apply a sealing layer or a steam-proof cloth across the whole roof.

One of the plates, in this case the middle plate 1b but it may also be any of the other plates 1a, 1c has a first mark 2 equivalent to apex. The roof surface 4 has a first circular slope with a radial inclination α from the mark 2. According to one embodiment, there is, locally closest to the first mark, preferably distance with a radius r up to 500 mm from the apex, a second circular slope which has a steeper inclination β than the first slope α (not shown). For a roof, the first radial inclination α is preferably in the range 2-10 mm/m and the second radial inclination β in the range 7-200 mm/m. For other substantially flat limited surfaces such as e.g. floors and patios, the inclination from apex may be within other ranges.

Since the floor surface 4 is formed by multiple plates, in this case three, the separate plates 1a, 1b, 1c have an upper surface 4a, 4b, 4c with parts of the common circular slope. The middle plate 1b comprises the apex and the circular slope around it forms an elevation with the form of a cone with its tip defined by the first mark 2. The two outer plates 1a, 1c comprise a slope forming an elevation in the plates 1a, 1c with the shape of a part of a cone or blunt cone due to the cone being cut in one or both sides. The lowest point or points of the system marked with the second mark 12 end up in the periphery of the total surface formed by the multiple plates, typically at points of it that are at a maximal radial distance from apex. At these second marks, draining points are preferably provided which function as draining sewers possibly coupled to waste pipes/gutters.

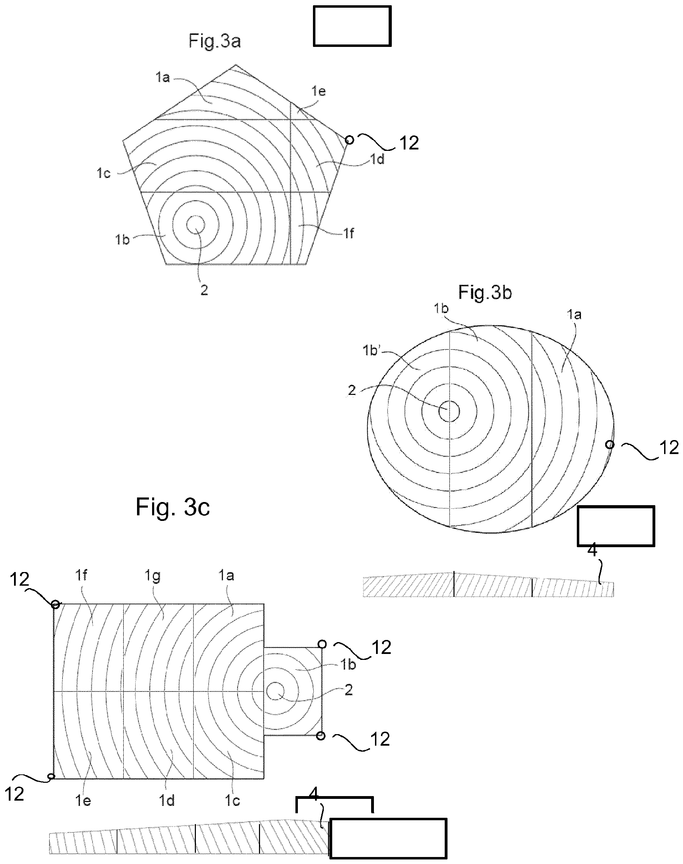

Figures 3a-4c show three different irregularly shaped roofs constructed with the roof system according to the invention. The roof systems shown in figures 3a-3c are all constructed by one or more rectangular plates 1a, 1b, 1b', 1c, 1d, 1e, 1f, 1g, with an upper roof surface 4 having a circular slope towards a floor drain, draining sewer or gutter. The outer edges of the roof are cut according to the desired shape. Regardless of what the roof looks like, no cutout is needed on site. The plates may already in the factory be specially manufactured according to the form of the roof. The lowest point or points of the system marked with the second mark 12 end up in the periphery of the total surface formed by the multiple plates, typically at points of it that are at a maximal radial distance from the apex. It is of course also possible to provide draining points at other places than those that are at a maximal radial distance from apex.

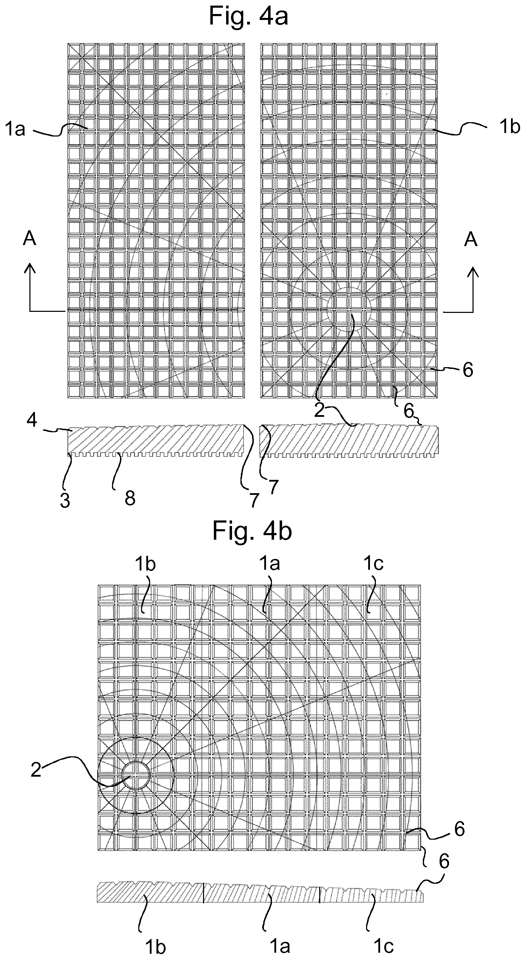

Figures 4a and 4b show an embodiment of a roof system with machined grooves 6 provided in the upper surface 4 of the plates 1. The grooves are in this embodiment created in a chequered pattern that may extend all the way to the edges of the plate (4a) or terminate a distance inwards from the edge (fig 4b). In the grooves, a cable or pipe (not shown) for heating coils may be placed, for instance with the purpose to melt snow or ice on the roof. The roof heating coils are cast on site with liquid filler. By the grooves crossing each other and being filled with a heat spreading liquid filler, the heat from the roof heating coils is spread out evenly across the roof.

It is also possible to put the grooves 6 in a chequered pattern so that it matches a reinforcement device, e.g. a prefabricated reinforcing steel mat or separate reinforcing bars put into the grooves 6 one by one, or attached to each other by means of frapping. If a reinforcement device is used, the entire construction becomes stronger and the separate plates are held together. When the reinforcing steel mat is put into the grooves, they may be filled with e.g. liquid filler or concrete. Of course, these tracks may also be machined in the plate shown in figure 1a-1d. The reinforcement then reinforces the plate itself.

In the embodiment shown in figure 4a, the edges of the plates have a bevel 7 which may be existing from the factory, or that may be machined with the machine creating the slope. When the plates 1a, 1b, 1c are positioned side by side, a beveled notch arises in the junction 6 between the plates. This notch may be filled with e.g. liquid filler. Thus there may be liquid filler both in the junctions 6 between the plates and on the upper surface 4 of the plates. The separate plates 1a, 1b, 1c are then cast together to one unit 1.

It is also possible to machine/mill grooves 8 in the lower surface 3 of the plates 1. These grooves 8 preferably extend across the entire lower surface 3 of the roof and contribute to an air flow between the lower roof and roof system. Thus the roof becomes better ventilated and the risk for moisture damage decreases.

It is also possible to instead provide the at least one plate on a distance from the surface it is to cover. The distance between the roof and the plate may be used for ventilation or for placing electrical cables or water conduits.

The roof system may be manufactured through different machining/manufacturing processes.

For example, it is possible to prefabricate plates with a circular slope through casting the separate plates in a cast form, through compression moulding or through plastic deformation of the plates by a hollow cone shaped pressing tool with heat, so called hot pressing.

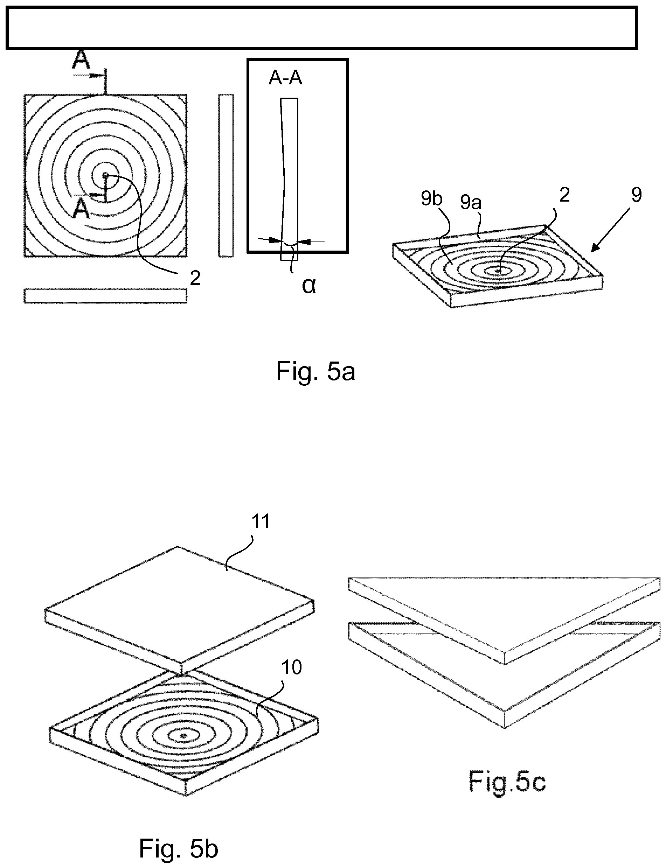

When manufacturing through casting, a one-part casting mould 9 is used, preferably made of steel or other suitable material, with a mirror-inverted slope. See figure 5a, showing the center plate with the first mark 2 for apex centrally located on the plate. I.e. the mould 9 is defined by a frame 9a and a lower frame surface 9b having at least one determined desired radial positive inclination (α, β) in a direction from the first mark 2 marking the apex towards the outer edges of the mould. The radial inclination corresponds to the slope of the upper surface 4 of the plate.

For other moulds intended to cast the plates that are to be disposed around the center plate 1b, there is no part intended to form the apex but instead the inclination originates from all, or essentially all, of the points on the frame surface, i.e. no part of the lower frame surface is entirely flat which in practice means that the apex will be in its center point.

The casting mould is filled with concrete or other correspondingly cured material with any reinforcing additions in a suitable way. It is also possible to reinforce the plates with a reinforcing net, reinforcing bar or with separate needles or fibers. When the plate is completed, the upper casting surface forms the substantially planar lower surface 3 of the plate.

It is also possible to use multiple materials in the plates. For example, a layer of cellular plastic may be put on the not fully cured concrete, or it may be glued at a later time.

When manufacturing with compression moulding, see Figs. 5b and 5c, a two-part mould form comprising a first part 10 and a second part 11 is used, which encompasses an inner volume that at least partly corresponds to the volume of the at least one plate 1, 1b, 1b, 1c. Figure 5c shows a triangular two-part mould that may also be used for manufacturing plates with a circular slope.

The first part 10 of the mould has at least one determined desired radial positive inclination (α, β) in a direction from the first mark 2 which marks the apex towards the outer edges of the mould. The second part 11 of the mould has a flat inner surface that corresponds to the substantially planar lower surface 3 of the plate. Preferably the second part 11 of the mould may be used for manufacturing all separate plates 1a-1g. The other moulds intended for casting the plates which are to be disposed around the center plate 1b, do not have an indentation part intended to form the apex, but instead the inclination originates from all, or essentially all, of the points on the frame surface, i.e. no part of the lower frame surface is entirely flat.

The plates are manufactured by the material which is to constitute the plate being supplied to the inner volume between the first and second part 10, 11 of the mould. When the material has been cured, the first and second part of the mould are separated and the completed plate with parts of a circular slope is taken out.

When manufacturing with hot pressing, not shown, e.g. a pre-heated plate made of polyamide plastic (PA) or polypropylene (PP) is placed in a lower part of a moulding tool. After placing the material kit, the tool is closed and the material is pressed out into the mould room. When the material has been cured, the tool is opened and the plate with a completed circular slope is removed.

It is also possible to mill the slope from a flat plate, not shown. If the decline and shape of the floor is milled, it is preferably machined with a 5-axes (X, Y, Z, A and C axes) programmable mill with a work area of 3300 mm x 5000 mm. The mill comprises a milling spindle which may be tilted to a desired inclination. The machine has automatic tool switching and vacuum table so that the plates are held in place. The Y-axis extends horizontally in the longitudinal direction of the machine, the X-axis extends horizontally laterally across the longitudinal direction of the machine, and the Z-axis extends in the vertical direction. Movements around the A-axis tilts the milling spindle to a desired number of degrees and in case of movements around the C-axis, the spindle rotates around its own axis.

When preparing a floor or a wet room, or a roof, for example with the dimensions 2700 mm x 3500 mm, i.e. 9,45 m², three plates with the dimensions 1200 mm x 3000 mm are preferably used, which are put side by side on the work area of the mill. In a computer program, a number of platforms are stored depending on how many sewers or draining points the room or the roof, respectively, should have, most bathrooms have a sewer. The platform is programmed with information regarding the size of the floor and roof and the thickness of the plate, as sewer as the placement of the sewer and the apex on the floor and roof, respectively. The mill is tilted to a desired inclination, and the slope is milled in circular or linear movements with a planar mill and the center point of the sewer or roof is constantly the origin of the movements. When the plates have acquired their slopes, the size of the floor or roof is milled out of the plates through cutting the edges. The floor or roof may in this step be given different shapes, see figures 3a-3c. Also, holes are milled for the draining point(s) and possibly additional holes. The plates are then marked with a mark that corresponds to an accompanying drawing. Any waste is recycled.

If the roof is to have heating, a chequered pattern may be milled in the upper surface 4 of the roof, which completely follows the inclination of the roof.

The above method is directed at each roof system being specially made on demand and wherein there is information regarding the size and shape of the roof and the placement of the draining sewer or draining point.

It is also possible to manufacture a flexible roof system, wherein the plates are held in store at special sales outlets and are at a later stage adapted to the roof of a specific customer, it may be done in the following way:
- An "apex plate" is provided in two variants. On one of the two variants, the first mark for the apex is disposed centrally on the plate, on its center point. On the other variant, the first mark for the apex is disposed e.g. at least a fourth into the plate from one of the edges of the plate.
- With the apex as origin, the plates side by side are machined in the same way as described previously.

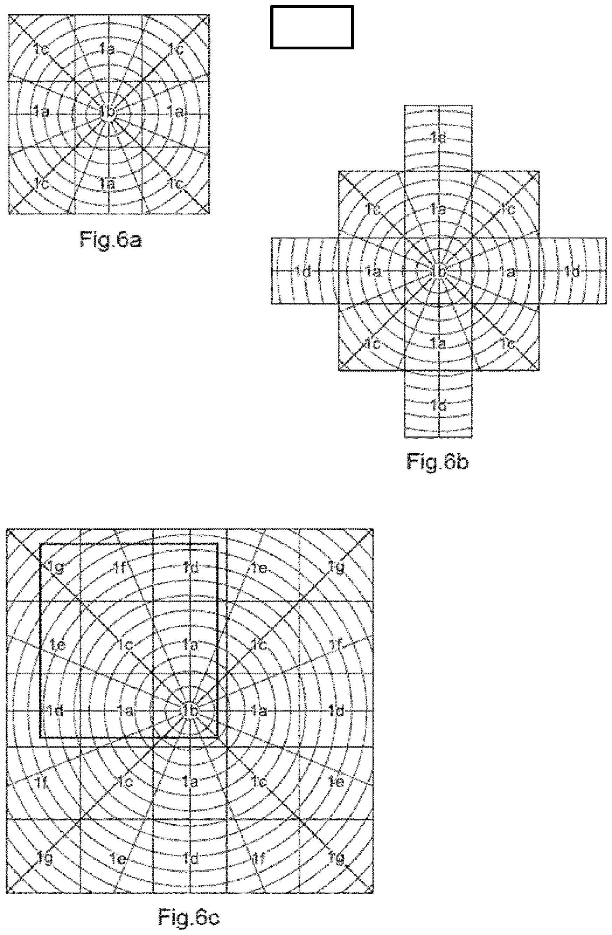

It is also possible to manufacture and install a flexible roof system where each separate plate is manufactured in a mould having an inner volume which at least partly corresponds to the volume of the at least one plate 1, 1a-1g. This circular multi system is shown in figures 6a-6c.

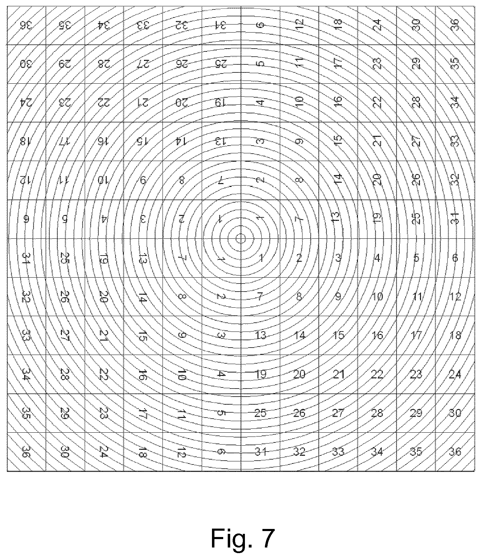

This system is constructed by substantially square plates 1a-1g wherein the first mark 2 for the apex is centrally located on a first plate 1b, and remaining plates 1a, 1c-1g add on around the first plate 1b in a radially outwards facing pattern, see figs. 6a and 6b. The first plate 1b with the apex is made in one mould. Due to the apex being centrally located on the first plate 1b, the radial inclination of the slope on remaining plates is the same on at least four of the remaining plates 1a, 1c-15. Thus the same mould may be reused for multiple plates. In the figures 6a-6c, there is shown maximally seven variants of plates. Of course the system may be extended with an infinite amount of plates if desired. According to one embodiment shown in Fig. 7, apex is divided in four central identical plates, numbered 1, and remaining plates 2-36 in this example build onto six rows disposed underneath each other, each one of the rows essentially facing away from apex, i.e. from a higher point towards a lower point of the roof, in each of the surrounding apex of the four quadrants. Thus this example of a surface system comprises four sets with 32 identical plates. Thus a surface covering system is achieved which is easier to use and faster to distribute, e.g. for a roofing professional.

From a system with plates 1a-1g, e.g. laying in store at a sales outlet, the end customer or entrepreneur may, based on the size of the room and the placement of the apex, choose the amount of plates of each form that are needed to create the roof. On site on the construction site, the sales outlet or in the factory, the outer plates are cut and adapted to the outer limits of the roof, see figure 6c.

Central to this invention is to achieve a prefabricated roof having an even circular slope from all points, or essentially all points, of the roof or a single plate constituting part of the upper surface of the room. According to one embodiment, essentially all points means 50%-100% of the area of the roof or a single plate constituting a part of the upper surface of the roof. According to one embodiment, essentially all points means 75%-100% of the area of the upper surface of the roof. According to one embodiment, essentially points means 90%-100% of the area of the roof or a plate constituting a part of the upper surface of the roof. According to one embodiment, essentially all points means 95%-100% of the area of the roof or a plate constituting a part of the upper surface of the roof. According to one embodiment, essentially all points means 100% of the area of the roof or a plate constituting a part of the upper surface of the roof. The slope originates from the place where the apex is placed and the roof should be manufactured with as few rectangular plates as possible. In the description above, there is described a roof system with one to three plates, but in case of large roofs it is of course possible to use multiple plates. In production, preferably standard sizes of the plates are used.

## Claims

1. A surface covering system for the covering of a roof, a floor, or another substantially flat limited surface comprising at least one substantially rectangular, triangular, quadrangular or otherwise polygonal plate (1, 1a, 1b, 1c) with a first mark (2) marking a highest point, i.e. an apex and a substantially flat lower surface (3) and an upper surface (4) with a first slope facing from the first mark (2) towards at least one second mark (12) provided in connection to the outer edge of the plate, **characterized in that** the first slope is circular and has a radial linear inclination (α) facing from the first mark (2) towards essentially all points on the upper surface (4) of the at least one plate (1, 1a, 1b, 1c) such that the slope forms an elevation in the plate (1, 1a, 1b, 1c) with the shape of at least a part of a cone or a blunt cone, with the apex of the cone defined by the first mark (2) and with the lowest point or points of the upper surface (4) of the plate defined by the at least one second mark (12).

2. The surface covering system according to claim 1, wherein the system comprises at least two separate, substantially rectangular, triangular, quadrangular of otherwise polygonal plates (1, 1a, 1b, 1c) with a substantially flat lower surface (3) and an upper surface (4), wherein the at least two plates (1, 1a, 1b, 1c) are intended to be disposed side by side and wherein one of the at least two plates (1a) has a first mark (2) marking an apex and wherein both at least two separate plates (1a, 1b) have an upper surface (4) with a first common circular slope with a radial inclination (α) facing from the first mark (2) towards at least one second mark (12), provided in connection to the outer edge of the plate, when the plates are disposed side by side.

3. The surface covering system according to claim 2, wherein the upper surface (4) of the at least one lateral edge of the respective plate (1a, 1b, 1c) is beveled such that a beveled notch forms the junction (6) arising between the plates (1a, 1b, 1c) when the plates are disposed side by side.

4. The surface covering system according to any one of claims 1-3, wherein locally, closest to the first mark (2), there is a second circular slope having a second inclination (β) which is steeper than the first inclination (α) of the first circular slope.

5. The surface covering system according to claim 4, wherein the second slope with inclination (β) extends from the first mark (2) to a radius up to 500 mm from the mark (2).

6. The surface covering system according to any one of claims 1-5, wherein grooves (8) are provided in the upper surface (4) and/or the lower surface (3) of the at least one plate (1, 1a, 1b, 1c).

7. A method for preparing a surface covering system comprising at least one plate according to any one of claims 1-6, **characterized in that** it comprises the steps of:
placing at least one plate (1, 1a, 1b, 1c) on a work table,
marking with a first mark (2) at least one apex on the at least one plate (1, 1a, 1b, 1c)
determining a desired inclination (α, β) on an upper surface (4) of the at least one plate (1, 1a, 1b, 1c) in a direction from the first mark (2) based on information regarding desired size of the surface the system is to be adapted to, the thickness of the plates and the apex, and
preparing a desired inclination (α, β) on the upper surface (4) of the at least one plate (1, 1a, 1b, 1c).

8. The method according to claim 7, wherein the outer dimensions of the at least one plate (1, 1a, 1b, 1c) are adapted according to a desired size of the surface which the system is to be adapted to after the slope has been prepared.

9. A method for preparing a surface covering system comprising at least one plate with a slope from a first mark (2) which marks an apex according to any of the claims 1-6, **characterized in that** it comprises the steps of:
choosing a first mould comprising an inner volume which at least partly corresponds to the volume of the at least one plate (1, 1a, 1b, 1c), wherein the mould comprises at least one determined desired radial positive inclination (α, β) in a direction from the first mark which marks an apex towards the outer edges of the mould, and
supplying material in an amount related to the at least one plate (1, 1a, 1b, 1c) in the mould.

10. The method according to claim 9, wherein the mould chosen is one-part or two-part and comprises at least one lower mould part.

11. The method according to claim 9 or 10, wherein at least one second mould is chosen, the inner volume of which corresponds to the volume of a second separate plate (1b, 1c) which has a slope which is common with the second plate and wherein material is supplied to the second mould in an amount related to the second plate (1, 1a, 1b, 1c).

12. The method according to any one of claims 9-11, wherein the preparing the at least one plate is done by use of any of the following manufacturing methods hot pressing, compression moulding, or casting of the at least one plate (1).

13. The method according to any one of claims 7-12 also comprising the step of:
creating a hole for a draining sewer at at least a second mark (12) which marks a lowest point of an upper surface (4) of the surface covering system (2).

14. Method according to any of claims 7-13 also comprising the step of:
machining grooves (8) in the upper surface (4) and/or lower surface (3) of the at least one plate (1, 1a, 1b, 1c), which extend across the entire respective surface (3, 4).

15. The method according to any one of claims 8-14, wherein the outer dimensions of the at least one mould are the same as the outer dimensions of the at least second mould.

## Patentansprüche

1. Oberflächenabdeckungssystem zum Abdecken eines Daches, eines Bodens oder einer anderen, im Wesentlichen flachen, begrenzten Oberfläche, umfassend mindestens eine im Wesentlichen rechteckige, dreieckige, viereckige oder anderweitig polygonale Platte (1, 1a, 1b, 1c) mit einer ersten Markierung (2), die einen höchsten Punkt markiert, d.h. eine Spitze und eine im Wesentlichen flache untere Oberfläche (3) und eine obere Oberfläche (4) mit einer ersten Schräge, die von der ersten Markierung (2) in Richtung mindestens einer zweiten Markierung (12) gerichtet ist, die in Verbindung mit der äußeren Kante der Platte angeordnet ist, **dadurch gekennzeichnet, dass** die erste Schräge kreisförmig ist und eine radiale, lineare Steigung (α) aufweist, die von der ersten Markierung (2) in Richtung im Wesentlichen aller Punkte auf der oberen Oberfläche (4) der mindestens einen Platte (1, 1a, 1b, 1c) gerichtet ist, sodass die Schräge eine Erhebung in der Platte (1, 1a, 1b, 1c) mit der Form mindestens eines Teils eines Kegels oder eines stumpfen Kegels bildet, mit der Spitze des Kegels, die durch die erste Markierung (2) definiert ist, und mit dem niedrigsten Punkt oder den Punkten der oberen Oberfläche (4) der Platte, die durch die mindestens eine zweite Markierung (12) definiert sind.

2. Oberflächenabdeckungssystem nach Anspruch 1, wobei das System mindestens zwei separate, im Wesentlichen rechteckige, dreieckige, viereckige von anderweitigen polygonalen Platten (1, 1a, 1b, 1c) mit einer im Wesentlichen flachen unteren Oberfläche (3) und einer oberen Oberfläche (4) umfasst, wobei die mindestens zwei Platten (1, 1a, 1b, 1c) dazu vorgesehen sind, nebeneinander angeordnet zu werden, und wobei eine der mindestens zwei Platten (1a) eine erste Markierung (2) aufweist, die eine Spitze markiert, und wobei beide der mindestens zwei getrennten Platten (1a, 1b) eine obere Oberfläche (4) mit einer ersten gemeinsamen kreisförmigen Schräge mit einer radialen Steigung (α) aufweisen, die von der ersten Markierung (2) in Richtung mindestens einer zweiten Markierung (12) gerichtet ist, die in Verbindung mit der äußeren Kante der Platte bereitgestellt ist, wenn die Platten nebeneinander angeordnet sind.

3. Oberflächenabdeckungssystem nach Anspruch 2, wobei die obere Oberfläche (4) der mindestens einen seitlichen Kante der jeweiligen Platte (1a, 1b, 1c) abgeschrägt ist, sodass eine abgeschrägte Kerbe die zwischen den Platten (1a, 1b, 1c) entstehende Verbindung (6) bildet, wenn die Platten nebeneinander angeordnet sind.

4. Oberflächenabdeckungssystem nach einem der Ansprüche 1-3, wobei es lokal, der ersten Markierung (2) am nächsten, eine zweite kreisförmige Schräge gibt, die eine zweite Steigung (β) aufweist, die steiler ist als die erste Steigung (α) der ersten kreisförmigen Schräge.

5. Oberflächenabdeckungssystem nach Anspruch 4, wobei sich die zweite Schräge mit einer Steigung (β) von der ersten Markierung (2) bis zu einem Radius von bis zu 500 mm von der Markierung (2) erstreckt.

6. Oberflächenabdeckungssystem nach einem der Ansprüche 1-5, wobei Nuten (8) in der oberen Oberfläche (4) und/oder der unteren Oberfläche (3) der mindestens einen Platte (1, 1a, 1b, 1c) bereitgestellt sind.

7. Verfahren zur Herstellung eines Oberflächenabdeckungssystems, umfassend mindestens eine Platte nach einem der Ansprüche 1-6, **dadurch gekennzeichnet, dass** es die folgenden Schritte umfasst:
Platzieren mindestens einer Platte (1, 1a, 1b, 1c) auf einem Arbeitstisch,
Markieren mit einer ersten Markierung (2) mindestens eine Spitze auf der mindestens einen Platte (1, 1a, 1b, 1c),
Bestimmen einer gewünschten Steigung (α, β) auf einer oberen Oberfläche (4) der mindestens einen Platte (1, 1a, 1b, 1c) in einer Richtung von der ersten Markierung (2) basierend auf einer Information bezüglich einer gewünschten Größe der Oberfläche, an die das System anzupassen ist, der Dicke der Platten und der Spitze, und
Herstellen einer gewünschten Steigung (α, β) auf der oberen Oberfläche (4) der mindestens einen Platte (1, 1a, 1b, 1c).

8. Verfahren nach Anspruch 7, wobei die Außenabmessungen der mindestens einen Platte (1, 1a, 1b, 1c) gemäß einer gewünschten Größe der Oberfläche angepasst werden, an welche das System angepasst werden soll, nachdem die Schräge hergestellt worden ist.

9. Verfahren zur Herstellung eines Oberflächenabdeckungssystems, umfassend mindestens eine Platte mit einer Schräge von einer ersten Markierung (2), die eine Spitze markiert nach einem der Ansprüche 1-6, **dadurch gekennzeichnet, dass** es die folgenden Schritte umfasst:
Wählen einer ersten Form, die ein Innenvolumen umfasst, das mindestens teilweise dem Volumen der mindestens einen Platte (1, 1a, 1b, 1c) entspricht, wobei die Form mindestens eine bestimmte gewünschte, radiale positive Steigung (α, β) in einer Richtung von der ersten Markierung, die eine Spitze markiert, in Richtung der äußeren Kanten der Form umfasst, und
Zuführen von Material in einer Menge, die sich auf die mindestens eine Platte (1, 1a, 1b, 1c) bezieht, in die Form.

10. Verfahren nach Anspruch 9, wobei die gewählte Form einteilig oder zweiteilig ist und mindestens ein unteres Formteil umfasst.

11. Verfahren nach Anspruch 9 oder 10, wobei mindestens eine zweite Form gewählt wird, deren Innenvolumen dem Volumen einer zweiten separaten Platte (1b, 1c) entspricht, die eine mit der zweiten Platte gemeinsame Schräge aufweist, und wobei das Material der zweiten Form in einer Menge zugeführt wird, die sich auf die zweite Platte (1, 1a, 1b, 1c) bezieht.

12. Verfahren nach einem der Ansprüche 9-11, wobei das Herstellen der mindestens einen Platte unter Verwendung eines der folgenden Herstellungsverfahren Heißpressen, Formpressen oder Gießen der mindestens einen Platte (1) erfolgt.

13. Verfahren nach einem der Ansprüche 7-12, auch umfassend den folgenden Schritt:
Erzeugen eines Lochs für einen Ablaufkanal an mindestens einer zweiten Markierung (12), die einen tiefsten Punkt einer oberen Oberfläche (4) des Oberflächenabdeckungssystems (2) markiert.

14. Verfahren nach einem der Ansprüche 7-13, auch umfassend den folgenden Schritt:
Bearbeiten von Nuten (8) in der oberen Oberfläche (4) und/oder der unteren Oberfläche (3) der mindestens einen Platte (1, 1a, 1b, 1c), die sich über die gesamte jeweilige Oberfläche (3, 4) erstrecken.

15. Verfahren nach einem der Ansprüche 8-14, wobei die Außenabmessungen der mindestens einen Form die gleichen sind wie die Außenabmessungen der mindestens zweiten Form.

## Revendications

1. Système de recouvrement de surface pour recouvrir un toit, un sol ou une autre surface limitée sensiblement plane comprenant au moins une plaque (1, 1a, 1b, 1c) sensiblement rectangulaire, triangulaire, quadrangulaire ou sinon polygonale, avec une première marque (2) marquant un point le plus élevé, c'est-à-dire un sommet et une surface inférieure sensiblement plate (3) et une surface supérieure (4) avec une première pente faisant face à la première marque (2) vers au moins une seconde marque (12) prévue en liaison avec le bord extérieur de la plaque, **caractérisé en ce que** la première pente est circulaire et présente une inclinaison linéaire radiale (α) faisant face à la première marque (2) vers pratiquement tous les points de la surface supérieure (4) de la au moins une plaque (1, 1a, 1b, 1c) de telle sorte que la pente forme une élévation dans la plaque (1, 1a, 1b, 1c) avec la forme d'au moins une partie d'un cône ou d'un cône émoussé, avec le sommet du cône défini par le premier repère (2) et avec le ou les points les plus bas de la surface supérieure (4) de la plaque définis par la au moins une seconde marque (12).

2. Système de recouvrement de surface selon la revendication 1, dans lequel le système comprend au moins deux plaques (1, 1a, 1b, 1c) séparées, sensiblement rectangulaires, triangulaires, quadrangulaires, de sinon polygonales avec une surface inférieure sensiblement plate (3) et une surface supérieure (4), dans lequel les au moins deux plaques (1, 1a, 1b, 1c) sont prévues pour être disposées côte à côte et dans lequel l'une des au moins deux plaques (1a) comporte une première marque (2) marquant un sommet et dans lequel les au moins deux plaques séparées (1a, 1b) ont une surface supérieure (4) avec une première pente circulaire commune avec une inclinaison radiale (α) faisant face à la première marque (2) vers au moins une seconde marque (12), prévue en liaison avec le bord extérieur de la plaque, lorsque les plaques sont disposées côte à côte.

3. Système de recouvrement de surface selon la revendication 2, dans lequel la surface supérieure (4) du au moins un bord latéral de la plaque respective (1a, 1b, 1c) est biseauté de sorte qu'une encoche biseautée forme la jonction (6) survenant entre les plaques (1a, 1b, 1c) lorsque les plaques sont disposées côte à côte.

4. Système de recouvrement de surface selon l'une quelconque des revendications 1 à 3, dans lequel, localement, au plus près de la première marque (2), il existe une seconde pente circulaire ayant une seconde inclinaison (β) qui est plus raide que la première inclinaison (α) de la première pente circulaire.

5. Système de recouvrement de surface selon la revendication 4, dans lequel la seconde pente avec l'inclinaison (β) s'étend depuis la première marque (2) jusqu'à un rayon allant jusqu'à 500 mm à partir de la marque (2).

6. Système de recouvrement de surface selon l'une quelconque des revendications 1 à 5, dans lequel des rainures (8) sont ménagées dans la surface supérieure (4) et/ou la surface inférieure (3) de la au moins une plaque (1, 1a, 1b, 1c).

7. Procédé de préparation d'un système de recouvrement de surface comprenant au moins une plaque selon l'une quelconque des revendications 1 à 6, **caractérisé en ce qu'**il comprend les étapes consistant à :
placer au moins une plaque (1, 1a, 1b, 1c) sur une table de travail,
marquer avec une première marque (2) au moins un sommet sur la au moins une plaque (1, 1a, 1b, 1c)
déterminer une inclinaison souhaitée (α, β) sur une surface supérieure (4) de la au moins une plaque (1, 1a, 1b, 1c) dans une direction à partir de la première marque (2) en fonction d'informations relatives à la taille souhaitée de la surface à laquelle le système doit être adapté, l'épaisseur des plaques et le sommet, et
préparer une inclinaison souhaitée (α, β) sur la surface supérieure (4) de la au moins une plaque (1, 1a, 1b, 1c).

8. Procédé selon la revendication 7, dans lequel les dimensions extérieures de la au moins une plaque (1, 1a, 1b, 1c) sont adaptées en fonction d'une taille souhaitée de la surface à laquelle le système doit être adapté après la préparation de la pente.

9. Procédé de préparation d'un système de recouvrement de surface comprenant au moins une plaque avec une pente à partir d'une première marque (2) qui marque un sommet selon l'une quelconque des revendications 1 à 6, **caractérisé en ce qu'**il comprend les étapes consistant à :
choisir un premier moule comprenant un volume intérieur qui correspond au moins en partie au volume de la au moins une plaque (1, 1a, 1b, 1c), dans lequel le moule comprend au moins une inclinaison positive radiale souhaitée déterminée (α, β) dans une direction à partir de la première marque qui marque un sommet vers les bords extérieurs du moule, et
fournir du matériau en une quantité liée à la au moins une plaque (1, 1a, 1b, 1c) dans le moule.

10. Procédé selon la revendication 9, dans lequel le moule choisi est en une partie ou en deux parties et comprend au moins une partie de moule inférieure.

11. Procédé selon la revendication 9 ou 10, dans lequel au moins un second moule est choisi, dont le volume intérieur correspond au volume d'une seconde plaque séparée (1b, 1c) qui a une pente qui est commune à la seconde plaque et dans lequel le matériau est fourni au seconde moule en une quantité liée à la seconde plaque (1, 1a, 1b, 1c).

12. Procédé selon l'une quelconque des revendications 9 à 11, dans lequel la préparation de la au moins une plaque est effectuée en utilisant l'un quelconque des procédés de fabrication suivants, un pressage à chaud, un moulage par compression ou une coulée de la au moins une plaque (1).

13. Procédé selon l'une quelconque des revendications 7 à 12, comprenant en outre l'étape consistant à :
créer un trou pour une évacuation de drainage au niveau d'au moins une seconde marque (12) qui marque le point le plus bas d'une surface supérieure (4) du système de recouvrement de surface (2).

14. Procédé selon l'une quelconque des revendications 7 à 13, comprenant en outre l'étape consistant à :
usiner des rainures (8) dans la surface supérieure (4) et/ou la surface inférieure (3) de la au moins une plaque (1, 1a, 1b, 1c), qui s'étendent sur toute la surface respective (3, 4).

15. Procédé selon l'une quelconque des revendications 8 à 14, dans lequel les dimensions extérieures du au moins un moule sont les mêmes que les dimensions extérieures du au moins un second moule.
